# EUROPÄISCHE PATENTSCHRIFT

(11) **EP 0 845 088 B1**
(45) Veröffentlichungstag und Bekanntmachung des Hinweises auf die Patenterteilung: **27.06.2001**
(21) Anmeldenummer: 96937993.2
(22) Anmeldetag: 31.08.1996
(51) Int. Cl.: F16F 15/18, G05D 19/02, F16C 39/06, F16F 15/03

(54) **SYSTEM ZUR AKTIVEN VERRINGERUNG VON RADIALSCHWINGUNGEN EINER ROTIERENDEN WELLE SOWIE HIERFÜR GEEIGNETE VERFAHREN**
SYSTEM FOR ACTIVELY REDUCING RADIAL VIBRATIONS IN A ROTATING SHAFT, AND METHOD OF OPERATING THE SYSTEM TO ACHIEVE THIS
SYSTEME DE REDUCTION ACTIVE DES VIBRATIONS RADIALES D'UN ARBRE ROTATIF ET PROCEDE ASSOCIE

(30) Priorität: 31.08.1995 DE 19532135; 31.08.1995 DE 19532163
(43) Veröffentlichungstag der Anmeldung: 03.06.1998
(73) Patentinhaber: Continental ISAD Electronic Systems GmbH & Co. oHG, 86899 Landsberg/Lech (DE)
(72) Erfinder: MASBERG, Ullrich, D-51503 Rösrath (DE); PELS, Thomas, D-46359 Heiden (DE); ZEYEN, Klaus-Peter, D-50670 Köln (DE); GRÜNDL, Andreas, D-81377 München (DE); HOFFMANN, Bernhard, D-82319 Starnberg (DE)
(74) Vertreter: von Samson-Himmelstjerna, Friedrich R., Dipl.-Phys.
(86) Internationale Anmeldenummer: DE9601665
(87) Internationale Veröffentlichungsnummer: WO9708477

(56) Entgegenhaltungen:
- EP-A- 0 175 952
- EP-A- 0 427 568
- EP-A- 0 604 979
- EP-A- 0 612 928
- US-A- 5 126 641
- PATENT ABSTRACTS OF JAPAN vol. 007, no. 240 (M-251), 25.Oktober 1983 & JP 58 126434 A (NISSAN JIDOSHA KK), 27.Juli 1983,

## Beschreibung

Die Erfindung betrifft ein System zur aktiven Dämpfung von Schwingungen einer rotierenden Welle, insbesondere der Triebwelle eines Verbrennungsmotors, mitttels einer elektrischen Maschine, welche zwei relativ zueinander drehbare elektromagnetische Wirkeinheiten aufweist, von denen eine mit der rotierenden Welle verbunden ist und die andere gegen Drehung festgelegt oder - alternativ - mit einer anderen drehbaren Welle verbunden ist.

Bei Hubkolben-Verbrennungsmotoren treten aufgrund der hin- und herbewegten Massen sowie der diskontinuierlichen Verbrennung im Brennraum eine Vielzahl von unterschiedlichen Schwingungen auf. Neben Schwingungen des gesamten Motors wird die Triebwelle (d.h. die Kurbelwelle) relativ zum sie aufnehmenden Motorgehäuse zu Radialschwingungen angeregt. Wegen der in Radialrichtung praktisch spielfreien Lagerung der Kurbelwelle handelt es sich bei diesen Schwingungen um Biegeschwingungen. Die Schwingungserregung erfolgt dabei hauptsächlich durch die Radialkomponenten der Massenkräfte an den Kurbelzapfen.

Die Biegeschwingungen stellen eine hohe Beanspruchung der Kurbelwelle dar. Die Kurbelwelle muß deshalb festigkeitsmäßig entsprechend stark dimensioniert werden. Hierzu bedarf es eines besonders hochwertigen Materials und eines aufwendigen Herstellungsverfahrens (z.B. Gesenkschmieden). Außerdem müssen höherbelastete Motoren (z.B. Dieselmotoren) i.a. nach jeder Kurbelkröpfung gelagert werden. Dies bedingt eine große statische Überbestimmtheit.

Bei Motoren, insbesondere mit niedriger Zylinderzahl kann es zu Resonanzüberhöhungen kommen, da die Kurbelwelle zusammen mit dem i.a. notwendigen Schwungrad ein schwingfähiges System niedriger Eigenfrequenz bildet, die im Betriebsbereich des Verbrennungsmotors liegt. Hierdurch können Resonanzüberhöhungen entstehen, die bis zum Bruch der Kurbelwelle führen können.

Zur Vermeidung von Resonanzüberhöhungen werden herkömmlicherweise Schwingungstilger und -dämpfer eingesetzt. Ein Schwingungstilger ist eine an das Schwingungssystem elastisch angekoppelte, passive Zusatzmasse. Die elastische Ankopplung der Zusatzmasse führt dazu, daß sich die ursprüngliche Resonanzfrequenz des Schwingungssystems verschiebt (genauer spaltet sie die ursprüngliche Resonanzfrequenz in zwei andere Resonanzfrequenzen auf). Durch entsprechende Auslegung der Zusatzmasse sowie der Steifigkeit der elastischen Kopplung kann man in vielen Fällen erreichen, daß die neuen Resonanzfrequenzen nicht mehr im Betriebsbereich oder wenigstens nicht mehr in einem besonders kritischen Teil des Betriebsbereiches liegen. Durch Wahl einer stark dämpfenden elastischen Kopplung kann man zudem dem Schwingungssystem Schwingungsenergie entziehen (durch Dissipation in Wärme) und die Größe einer etwaig verbliebenen Resonanzüberhöhung verringern (Schwingungsdämpfer). Im allgemeinen gelingt es, mit Hilfe von Schwingungstilgern/Schwingungsdämpfern die bei Kurbelwellen vorliegenden Radialschwingungsprobleme zu beherrschen.

Die aktive Verringerung von Drehungleichförmigkeiten mit Hilfe einer elektrischen Maschine ist aus der EP-A-0 175 952, nach der der Oberbegriff des Anspruchs 1 gebildet wurde, bekannt. Weitere ähnliche Vorrichtungen sind bekannt aus Patent Abstracts of Japan, Band 11, Nr. 28 (M-557), 27. Januar 1987 & JP-A-61 200 333; Patent Abstracts of Japan, Band 4, Nr. 29 (M-002), 14. März 1980; JP-A-55 005 454; EP-A-0 427 568; DE-A-32 30 607; Patent Abstracts of Japan, Band 7, Nr. 240 (M-251), 25. Oktober 1983 & JP-A-58 126 434; DE-A-41 00 937; EP-A-0 604 979.

Vorrichtungen zur Dämpfung von Radialschwingungen sind beispielsweise aus US-A-5 126 641 und EP-A 0 612 928 bekannt.

Die Erfindung hat zum Ziel, eine andere Lösung der Schwingungsprobleme bei einer Welle, insbesondere der Triebwelle eines Verbrennungsmotors, anzugeben.

Sie erreicht dieses Ziel bei einem System gemäß dem Oberbegriff des Anspruchs 1 dadurch, daß eine der Wirkeinheiten wenigstens zwei elektrisch unabhängig ansteuerbare Wirksektoren zur Erzeugung von Wanderfeldern umfaßt, die jeweils auf die andere Wirkeinheit Kräfte mit Radial- und Tangentialkomponenten ausüben derart, daß in den wenigstens zwei Wirksektoren die Radialkomponenten sich nicht aufheben zu einer ersten Radialkraft, und die Tangentialkomponenten ein Drehmoment erzeugen, so daß die elektrische Maschine sowohl Radial- als auch Drehschwingungen der Welle dämpft, oder sich die Tangentialkomponenten zu einer gegenüber der ersten Radialkraft verschieden gerichteten, zweiten Radialkomponente addieren, so daß die elektrische Maschine Radialschwingungen der Welle dämpft.
(Anspruch 1).

Die Anregung der Radialschwingungen erfolgt aufgrund der periodisch auftretenden Gas- und Massenkräfte mit einer der Drehzahl des Motors entsprechenden Frequenz oder einem Vielfachen hiervon. Daneben gibt es unregelmäßige (ggf. stochastische) Anregungen der Radialschwingungen, die beispielsweise von Zündaussetzern herrühren können.

Die aktive Verringerung der Radialschwingungen erfolgt insbesondere so, daß die von der elektromagnetischen Wirkvorrichtung aufgebrachte Kraft jeweils der momentanen Richtung der Biegeschwingungsbewegung (oder zumindest einer Komponente hiervon) entgegengerichtet ist. Mit anderen Worten erfolgt die Kraftbeaufschlagung der Welle gegenphasig zu deren Radialgeschwindigkeit, also mit 180° Phasenversetzung.

Möglich sind aber auch demgegenüber verschobene Phasenbeziehungen (z.B. 190° statt 180°), um auf diese Weise auch Schwingungen in anderen Teilen des Fahrzeugs, die i.a. phasenversetzt auftreten, mindern zu können.

Wird die Welle mit Kräften beaufschlagt, die ihrer Radialgeschwindigkeit entgegengerichtet sind, so wird ihrer unerwünschten Radialschwingung Energie entzogen - die Welle verrichtet nämlich Arbeit unter der bremsenden Kraft der elektromagnetischen Wirkvorrichtung. Folglich nimmt die Schwingungsamplitude ab - die Radialschwingung ist gedämpft.

Größe und Art der Dämpfung ist mit Hilfe der erfindungsgemäßen elektrischen Wirkvorrichtung frei einstellbar. Das System kann daher so betrieben werden, daß es eine mehr elastische oder mehr dämpfende Charakteristik aufweist. Die Charakteristik kann während des Betriebs verändert werden.

Grundsätzlich kann die elektromagnetische Wirkvorrichtung im Bereich eines Schwingungsbauchs zwischen zwei benachbarten Kurbelwellenlagern, also im Inneren des Verbrennungsmotors angreifen. Im allgemeinen wird jedoch eine Anordnung außerhalb des Verbrennungsmotors gewählt. Die Wirkvorrichtung wirkt dann z.B. außerhalb des letzten Kurbelwellenlagers auf einen nach außen ragenden Stummel der Kurbelwelle. Bei einer Radialschwingung der Welle im Motorinneren wird auch der Wellenstummel aufgrund der Starrheit der Welle zur Durchführung einer Radialschwingung veranlaßt. Eine Dämpfung oder Unterdrückung dieser Stummelschwingung hat wegen der Starrheit der Welle eine entsprechende Wirkung auf die Biegeschwingung im Inneren des Motors.

Unter der "elektrischen Maschine" wird eine rotatorische Maschine (Motor/Generator) verstanden, also eine Maschine, deren relativ bewegliche Wirkelemente (z.B. Läufer und Ständer) eine Rotations-Relativbewegung ausführen. Besonders vorteilhaft sitzt eines der Wirkelemente (z.B. der Läufer) direkt auf der rotierenden Welle und ist vorzugsweise fest mit ihr verbunden. Das andere Wirkelement (oder im Fall mehrerer: die Wirkelemente) ist i.a. nicht drehbar, z.B. am Kurbelgehäuse befestigt (und wird daher Ständer genannt). Zwischen diesen Wirkelementen befindet sich der Luftspalt der elektrischen Maschine. Die Kraftbeaufschlagung der rotierenden und in Radialrichtung schwingenden Welle erfolgt also über den (ausreichend breit dimensionierten) Luftspalt.

Bei üblichen elektrischen Maschinen ist eine solche Kraftwirkung in Radialrichtung unerwünscht; es sollen vielmehr nur Tangentialkräfte (d.h. Drehmomente) erzeugt werden: Dies wird üblicherweise durch eine axialsymmetrische Feldverteilung erzielt, bei der jede Radialkraft durch eine an gegenüberliegender Stelle erzeugte, entgegengesetzt gerichtete Kraft gleichen Betrages kompensiert wird. Bei einer Ausgestaltung der Erfindung hat die elektrische Maschine hingegen eine nicht axialsymmetrische Feldverteilung, so daß (nicht kompensierte) Radialkräfte zur aktiven Radialschwingungsdämpfung verbleiben.

Die elektrische Maschine kann einer Drehfeldmaschine ähneln, bei der ein vom Ständer erzeugtes magnetisches Drehfeld den Läufer mitnimmt. Bei solchen Maschinen überstreicht das magnetische Feld einen vollen 360°-Umlauf und ist im allgemeinen radialkraftkompensierend ausgebildet.

Zur Vermeidung der Radialkräftekompensation findet die Felderzeugung in Wirksektoren, also z.B. Kreissektoren mit weniger als 360° (z.B. 90°, 120° oder 180°) statt. Da die Felder hier keine vollen Umläufe ausführen, werden sie "Wanderfelder" (statt "Drehfelder") genannt.

Der Läufer kann z.B. ein Kurzschlußläufer oder ein Läufer mit festen Magnetpolen sein, entsprechend ähnelt die Maschine einer Asynchron- bzw. einer Synchronmaschine. Besonders vorteilhaft sind Synchronmaschinen oder Reluktanzmaschinen (dies sind z.B. durch Aussparungen im Läufer synchronisierte Asynchronmaschinen), denn sie erlauben die sektorartige Ausbildung des Ständers praktisch ohne Auftreten magnetischer Streufelder an den Endflächen des Sektors bzw. der Sektoren.

Umfaßt die elektrische Maschine zwei funktionell voneinander unabhängige Wirksektoren, die sich nicht axialsymmetrisch gegenüberliegen, können auf die Welle Radialkräfte in verschiedenen (nicht parallelen) Richtungen aufgebracht und so Radialschwingungen verschiedener Richtung entgegengewirkt werden.

Die elektrische Maschine dient außerdem der aktiven Verringerung von Drehungleichförmigkeiten der Welle, indem sie die Welle z.B. gegenphasig zu den Drehungleichförmigkeiten mit einem schnell variierenden Drehmoment beaufschlagt. Auch die Drehungleichförmigkeiten gehen bei einem Verbrennungsmotor hauptsächlich auf die Gas- und Massekräfte zurück.

Unter einer "schnellen Variation" des aufgebrachten Gegendrehmoments wird eine Variation im Frequenzbereich der zu verringernden Drehungleichförmigkeiten verstanden. Beispielsweise variiert bei der Drehungleichförmigkeit zweiter Ordnung und bei einer Drehzahl von 3.000 U/min das aufgebrachte Drehmoment mit einer Frequenz von 100 Hz.

Bei der Erfindung dient ein- und diesselbe elektrische Maschine der Dämpfung von Radialschwingungen und Drehungleichförmigkeiten.

Grundsätzlich kann die Drehungleichförmigkeitsdämpfung so stattfinden, daß die elektrische Maschine nur bremsend (und zwar zum Zeitpunkt einer positiven Drehungleichförmigkeit, d.h. einem über dem Mittelwert liegendem Drehmoment) oder nur antreibend wirkt (zu Zeitpunkten negativer Drehungleichförmigkeit, d.h. einem unter dem Mittelwert liegendem Drehmoment). Die elektrische Maschine arbeitet dann als intermittierende Bremse bzw. als intermittierender Motor. Eine besonders effektive Drehungleichförmigkeitsverringerung bringt jedoch eine Betriebsweise, bei der die elektrische Maschine ein schnell alternierendes Wechseldrehmoment aufbringt, und zwar bei einer positiven Drehungleichförmigkeit ein bremsendes und bei einer negativen ein antreibendes.

Das erfindungsgemäße System hat folgende Vorteile:
- es erlaubt eine sehr wirksame Unterdrückung der Dämpfung von Radial- und Drehschwingungen, insbesondere von Kurbelwellen;
- die Unterdrückung/Dämpfung kann über ein weites Frequenzband erfolgen;
- der Dämpfungsgrad und die Dämpfungscharakteristik sind in weiten Grenzen frei einstellbar;
- aufgrund der sehr wirksamen Schwingungsunterdrückung/dämpfung können hochbelastete Kurbelwellen mit geringerem Aufwand/zu geringeren Kosten geschaffen werden (nämlich aus weniger hochwertigem Material und mit geringerem Fertigungsaufwand) ;

Es gibt verschiedene Möglichkeiten, die funktionell unabhängigen Wirksektoren baulich zu realisieren. Eine vorteilhafte Möglichkeit besteht darin, daß die Sektoren voneinander gesonderte (insbesondere magnetisch gesonderte) Sektoren sind (Anspruch 2). Die Maschine entspricht dann zwei bzw. mehreren Sektormaschinen, die auf einen gemeinsamen Läufer wirken. Bei einer anderen, bevorzugten Möglichkeit werden die funktionell unabhängigen Wirksektoren durch unabhängige Wicklungsabschnitte gebildet, die gemeinsam auf einem magnetisch leitenden Ständerkörper angeordnet sind (Anspruch 3). In dieser Ausgestaltung entspricht die elektrische Maschine - abgesehen von der Ständerwicklung - z.B. einer üblichen Asynchron- oder Synchronmaschine in 360°-Geometrie. Vorteil dieser Ausgestaltung ist das geringere Ausmaß von Streufeldern aufgrund des gemeinsamen Ständers.

Im folgenden werden besonders vorteilhafte Ausgestaltungen erläutert, bei denen die elektrische Maschine eine oder mehrere Zusatzfunktionen übernimmt.

Zur Erzielung einer länger anhaltenden antreibenden oder bremsenden Wirkung kann die elektrische Maschine die Welle mit einem positiven oder negativen Gleichdrehmoment beaufschlagen (Anspruch 4). Unter "Gleichdrehmoment" wird ein Drehmoment verstanden, das konstant ist oder im Vergleich zum Wechseldrehmoment bei der Drehschwingungsdämpfung langsam variiert. Ein bremsendes Gleichdrehmoment kann dazu dienen, daß die elektrische Maschine als Generator zur Stromversorgung (etwa zur Ladung einer Batterie oder Speisung eines Bordnetzes) und/oder als verschleißfreie Fahrzeugbremse dient. Ein antreibendes Gleichdrehmoment kann zum Starten des Verbrennungsmotors oder zur Unterstützung des Verbrennungsmotors, z.B. beim Beschleunigen des Fahrzeugs dienen (die elektrische Maschine wirkt dann als "Booster") (Anspruch 5).

Als zweite mögliche Zusatzfunktion wirkt die elektrische Maschine als elektromagnetische Kupplung im Antriebsstrang und/oder als aktive Getriebesynchronisiereinrichtung (Anspruch 6). Sie kann anstelle oder zusätzlich zu einer herkömmlichen Reibkupplung oder einem herkömmmlichen hydrodynamischen Wandler angeordnet sein. Bei einer vorteilhaften Ausgestaltung ist die elektrische Maschine insgesamt drehbar gelagert, hat also neben dem drehbaren Läufer auch einen drehbaren Ständer. Eines dieser Wirkelemente (Läufer oder Ständer) ist mit der z.B. vom Verbrennungsmotor kommenden Antriebswelle (z.B. der Kurbelwelle) verbunden, das andere mit der z.B. zum Getriebe führenden Abtriebswelle. Durch Einstellen einer geeigneten Relativdrehzahl (d.h. eines geeigneten Schlupfes) zwischen Läufer und Ständer wird die Kupplungsfunktion erzielt. Beispielsweise entspricht verschwindender Kupplungsschlupf einer eingekuppelten Reibkupplung. Die Dämpfungsfunktionen für Radialschwingungen und ggf. Drehungleichförmigkeiten werden auch hier durch Aufbringen schnell alternierender Kräfte und ggf.

Drehmomente zwischen Läufer und Ständer erzielt. Zur Erzielung der Generatorfunktion stellt man einen geringfügig bremsenden Kupplungs-Schlupf ein. Zum Starten legt man die Abtriebswelle, z.B. mit Hilfe einer Bremsvorrichtung fest, gegen die beim Starten die Drehmomentabstützung der elektrischen Maschine erfolgt. Im Rahmen einer ASR-Regelung kann der Antriebsschlupf an den Rädern statt durch Bremsen auch durch Vergrößeren des Kupplungsschlupfes verringert werden.

Als aktive Getriebesynchronisiereinrichtung wirkt die elektrische Maschine bremsend oder beschleunigend auf die zum Getriebe führende Abtriebswelle, je nachdem wie dies im Verlauf eines Gangschaltvorgangs zur Erzielung eines Gleichlaufs von Getrieberädern benötigt wird. Abgesehen vom Starten, wo im allgemeinen keine Radialschwingungsdämpfung nötig ist, können diese Zusatzfunktion zeitgleich mit der Radialschwingungsdämpfung durchgeführt werden. Die Steuerung der elektromagnetischen Wirkvorrichtung (insbesondere in Form der elektrischen Maschine) wird dabei vorteilhaft von einem oder mehreren Wechselrichtern übernommen (Anspruch 8). Diese versorgen die Wicklungen der elektromagnetischen Wirkvorrichtung mit Strömen und Spannungen frei einstellbarer Amplitude, Frequenz und/oder Phase zur Erzeugung der gewünschten Wanderfelder. Vorteilhaft ist der Wechselrichter als Pulswechselrichter ausgestaltet.

Die aktive Verringerung von Schwingungen beruht - wie oben erwähnt - darauf, daß die elektrische Wirkvorrichtung eine der Schwingung entgegengerichtete Kraft auf die Welle aufbringt. Deren benötigte Frequenz und Phase kann beispielsweise duch entsprechende Steuerung oder Regelung der elektromagnetischen Wirkvorrichtung erzielt werden. Bei der Steuerung sind beispielsweise die erwarteten Größen der Radialschwingung, wie Richtung, Frequenz, Amplitude und Phase als Funktion einer oder mehrerer Parameter, wie z.B. Drehzahl des Verbrennungsmotors und Drosselklappenstellung, in einem Kennfeld oder in Form eines funktionellen Zusammenhangs abgespeichert. Für die durch laufende Messung ermittelten, jeweils vorliegenden Parameterwerte werden daraus die erwarteten Schwingungsgrößen und schließlich die benötigte Kraftwirkung der elektromagnetischen Wirkvorrichtung ermittelt. Selbstverständlich kann auch direkt die benötigte Kraftwirkung in Abhängigkeit von den Parametern abgespeichert sein. Bei der Regelung wird die tatsächliche momentane Geschwindigkeit der Biegeschwingung oder die momentane Auslenkung aus der Ruhelage detektiert (z.B. mit einem Magnetfeldsensor) und daraus die benötigte Kraftwirkung ermittelt. Vorteilhaft sind auch Mischformen hiervon möglich, z.B. eine Kennfeldsteuerung, deren gespeicherte Information aber nicht feststehend ist, sondern aufgrund von Meßergebnissen laufend an die tatsächlich vorliegenden Schwingungsverhältnisse angepaßt wird.

Die Einwirkung auf Drehungleichförmigkeiten erfolgt in entsprechender Weise durch Regelung, Steuerung bzw. Mischformen, wobei Meßgrößen beispielsweise die momentane Drehzahl (z.B. gemessen mit einem Drehtransformator) oder das momentane Drehmoment (z.B. gemessen mit einer Drehmoment-Meßwelle) sein können.

Um einen möglichst hohen Gesamtwirkungsgrad des Systems zu erzielen, wird vorteilhaft die bei bremsender Wirkung (d.h. beim Dämpfen von Radialschwingungen und ggf. beim Beaufschlagen mit einem bremsenden Drehmoment) gewonnene Energie wenigstens teilweise gespeichert und wiederverwendet (d.h. ggf. zum Beaufschlagen mit einem beschleunigenden Drehmoment) (Anspruch 7).

Die Speicherung der Bremsenergie kann insbesondere durch einen elektrischen Speicher, z.B. einer Kapazität, Induktivität und/oder einer schnellen Batterie erfolgen. Möglich ist auch die Speicherung in Form kinetischer Energie, z.B. in einem Schwungradspeicher.

Die Erfindung wird nun anhand von Ausführungsbeispielen und der angefügten schematischen Zeichnung näher erläutert.

### In der Zeichnung zeigen:

- Fig. 1: eine schematische Schnittdarstellung eines Systems zur aktiven Verringerung von Radialschwingungen mit einem Aktuator;
- Fig. 2: eine unmaßstäblich-schematische Darstellung eines Systems zur aktiven Verringerung von Radialschwingungen mit einer elektrischen Maschine;
- Fig. 3: eine schematische Schnittdarstellung der elektrischen Maschine, senkrecht zur Axialrichtung;
- Fig. 4: eine schematische Schnittdarstellung einer zweiten Ausführungsform einer elektrischen Maschine, senkrecht zur Axialrichtung;
- Fig. 5: eine schematische beispielhafte Darstellung der Funktionsweise der Schwingungsverringerung.

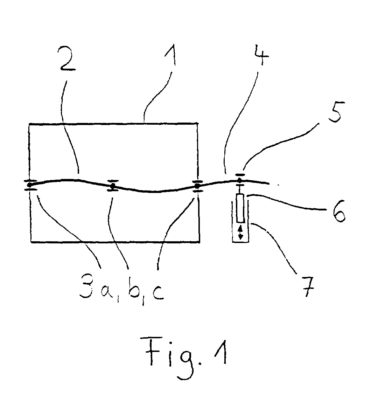

In Fig. 1 weist ein Verbrennungsmotor 1, bei dem es sich beispielsweise um einen Zweizylinder-Ottomotor handelt, eine Kurbelwelle 2 und drei Kurbelwellenlager 3 a, b, c auf. Die Kurbelwelle 2 wird aufgrund der periodisch auftretenden Gas- und Massenkräfte zu Radialschwingungen angeregt. Wegen der Starrheit der Kurbelwelle 2 setzt sich die Biegeschwingung nach außen, auf eine Verlängerung der Kurbelwelle 4 hin fort. Die Verlängerung der Kurbelwelle 4 ist auf einem beweglichen Wellenlager 5 gelagert, an dem ein Stellglied 6 eines Linearstellers 7 befestigt ist. Dieser Linearsteller setzt ein elektrisches Steuersignal in eine mechanische Linearstellung unter Kraftbeaufschlagung um. Diese erfolgt gegenphasig zur Radialgeschwindigkeit der Welle, also mit 180° Phasenversetzung. Dadurch wird der Welle Energie entzogen. Die Schwingungsamplitude nimmt ab, wodurch die Radialschwingung gedämpft wird.

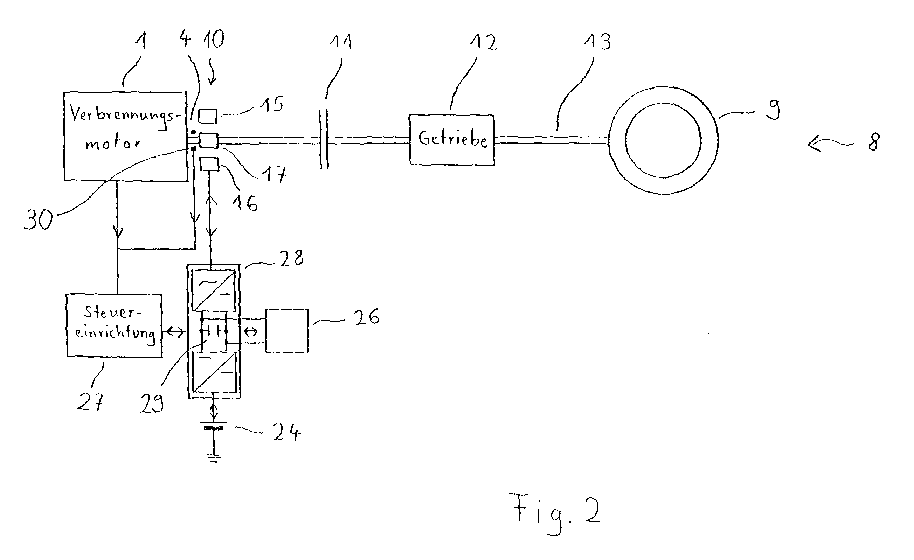

Ein Antriebssystem eines Kraftfahrzeugs, z.B. eines Personenkraftwagens gemäß Fig. 2 weist als Antriebsaggregat einen Verbrennungsmotor 1 auf. Das vom Verbrennungsmotor 1 erzeugte Drehmoment kann über einen Antriebsstrang 8 auf Antriebsräder 9 übertragen werden. In Antriebsrichtung ist im Antriebsstrang 8 nach dem Verbrennungsmotor 1 zunächst eine elektrische Maschine 10 angeordnet. Auf diese folgen eine Kupplung 11, ein Getriebe 12 und ein Achsantrieb 13, welcher das Drehmoment auf die Antriebsräder 9 überträgt. Die Kurbelwelle 2 des Verbrennungsmotors 1 führt aufgrund der Gas- und Massekräfte Radialschwingungen aus, die sich über die Verlängerung der Kurbelwelle 4 nach außen hin fortsetzen.

Die elektrische Maschine 10 umfaßt zwei Sektormaschinen 15, 16, die gemeinsam auf einen Läufer 17 wirken. Die Sektormaschinen 15, 16 stützen sich drehfest gegen den Verbrennungsmotor 1, ein (nicht gezeigtes) Fahrzeugchassis oder ein (nicht gezeigtes) Kupplungsgehäuse ab, wohingegen der Läufer 17 direkt auf der Verlängerung der Kurbelwelle 4 des Verbrennungsmotors 1 sitzt und mit dieser drehfest gekoppelt ist. Die Verlängerung der Kurbelwelle 4 und der Läufer 17 rotieren also gemeinsam, ohne Zwischenschaltung eines Getriebes.

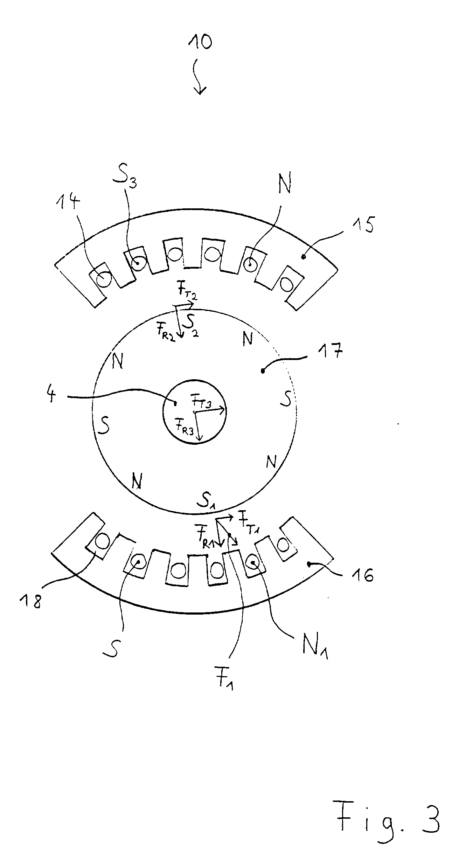

Die Wirkungsweise der elektrischen Maschine 10 verdeutlicht Fig. 3. Der innenliegende, drehfest mit der Verlängerung der Kurbelwelle 4 verbundene Läufer 17 trägt magnetische Pole, die durch Permanentmagnete oder über Schleifringe gespeiste Magnetspulen gebildet sein können. Die Sektormaschinen 15, 16 haben Dreiphasenwicklungen 14, die bei Beaufschlagung mit Dreiphasenstrom Wanderfelder mit jeweils zwei Polen ausbilden. Pro Pol sind drei Nuten 18, insgesamt pro Sektormaschine 15, 16 also 6 Nuten 18 vorhanden. Die momentane Lage der Pole ist mit den Bezugszeichen "S" (Südpol) und "N" (Nordpol) veranschaulicht. Die Hervorrufung von Radialkräften auf die Welle 4 verdeutlicht die vom Nordpol N₁ der Sektormaschine 15 auf den Südpol S₁ des Läufers 17 ausgeübte Anziehungskraft F₁, die in eine Radialkomponente F_{R1} und eine Tangentialkomponente F_{T1} zerlegt werden kann. Mit der Radialkraft F_{R1} kann Radialschwingungen der Welle in Richtung der Radialkraft F_{R1} direkt entgegengewirkt werden. Möglich ist aber auch ein Entgegenwirken von Radialschwingungen in Richtung der Kraft F_{T1}. So übt etwa der Südpol S₃ der zweiten Sektormaschine 15 eine abstoßende Kraft mit einer Tangentialkomponente F_{T2} auf den Südpol S₂ des Läufers 17 aus. Die beiden von den Kräften F_{T1} und F_{T2} auf den Läufer 17 ausgeübten Drehmomente heben sich auf; übrig bleibt eine Radialkraft F_{T3}. Die beiden auf den Läufer 17 wirkenden Radialkräfte F_{R1} und F_{R2} addieren sich zu der resultierenden Radialkraft F_{R3}. Die elektrische Maschine 10 kann also Radialkräfte beliebiger Richtung auf die Welle 4 aufbringen und somit Radialschwingungen beliebiger Richtung entgegenwirken.

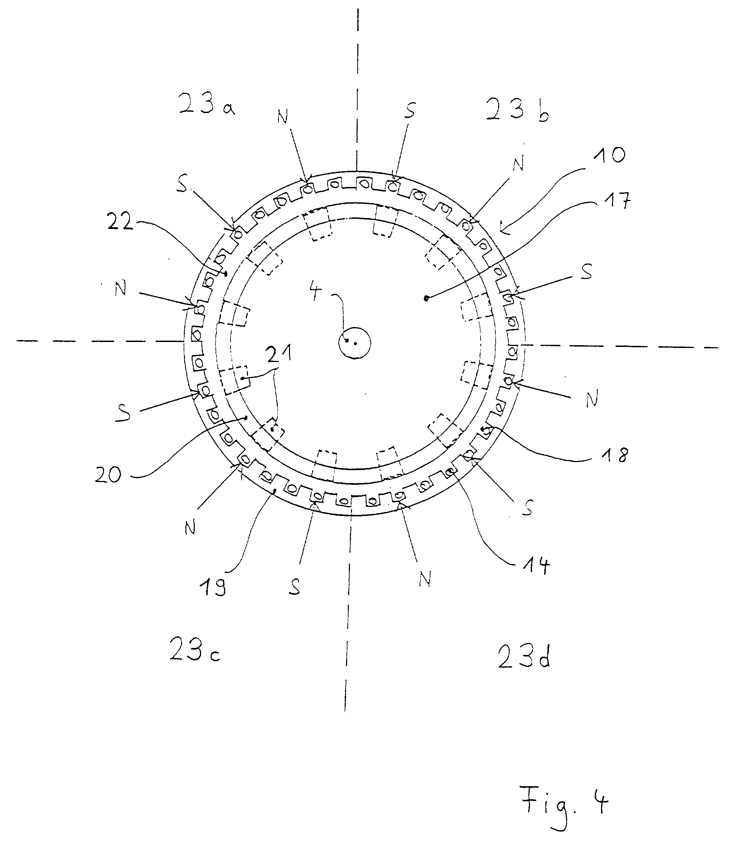

Fig. 4 zeigt eine weitere Ausführungsform einer elektrischen Maschine 10 zur Schwingungsdämpfung. Sie umfaßt einen drehfest mit der Verlängerung der Kurbelwelle 4 gekoppelten Läufer 17 und einen außenliegenden, kreisförmig durchgehenden Ständer 19 aus magnetisch leitendem Material (hier Eisen). Der Ständer 19 umfaßt Nuten 18 in Richtung der Welle 4. Die elektrische Maschine kann als Synchron- oder Asynchronmaschine ausgebildet sein. Der innenliegende Läufer 17 ist bei einer Asynchronmaschine als Käfigläufer mit im wesentlichen in Axialrichtung verlaufenden Käfigstäben, die jeweils stirnseitig mit einem Kurzschlußring 20 verbunden sind, ausgebildet. Bei der Synchronmaschine trägt der Läufer 17 eine entsprechende Zahl von Polen wie der Ständer 19 (hier zwölf Pole), die durch Permanentmagnete oder über Schleifringe gespeiste Magnetspulen gebildet sein können. In Fig. 4 ist die Synchronmaschine veranschaulicht, indem bei ihr vorhandene Läuferpole 21 schematisch angedeutet sind. Zwischen Läufer 17 und Ständer 19 befindet sich ein im Querschnitt ringförmiger Luftspalt 22.

Der Ständer 19 trägt hier vier unabhängige Wicklungen 14, die sich jeweils über einen 90°-Sektor 23 a, b, c, d des Ständers 19 erstrecken. Diese bilden bei Beaufschlagung mit Dreiphasenstrom vier Wanderfelder mit jeweils drei Polen aus. Pro Pol sind drei Nuten 18, insgesamt pro Sektor also neun Nuten 18 vorhanden. Die momentane Lage der Pole ist mit den Bezugszeichen "S" (für Südpol) und "N" (für Nordpol) veranschaulicht.

Die elektrische Maschine 4 gemäß Fig. 4 entspricht damit funktionell vier Sektormaschinen, die gemeinsam auf einen Läufer 17 wirken. Die vier Dreiphasenwicklungen 14 der vier Sektoren 23 a, b, c, d sind elektrisch unabhängig. Dies wird durch Beschaltung mit vier unabhängigen Wechselrichtern (hier nicht dargestellt) erreicht. Jeder unabhängige Sektor 23a, b, c, d kann, wie in Fig. 3 für Sektormaschinen 15, 16 erläutert, Radialkräfte auf die Welle 4 aufbringen und so Radialschwingungen entgegenwirken.

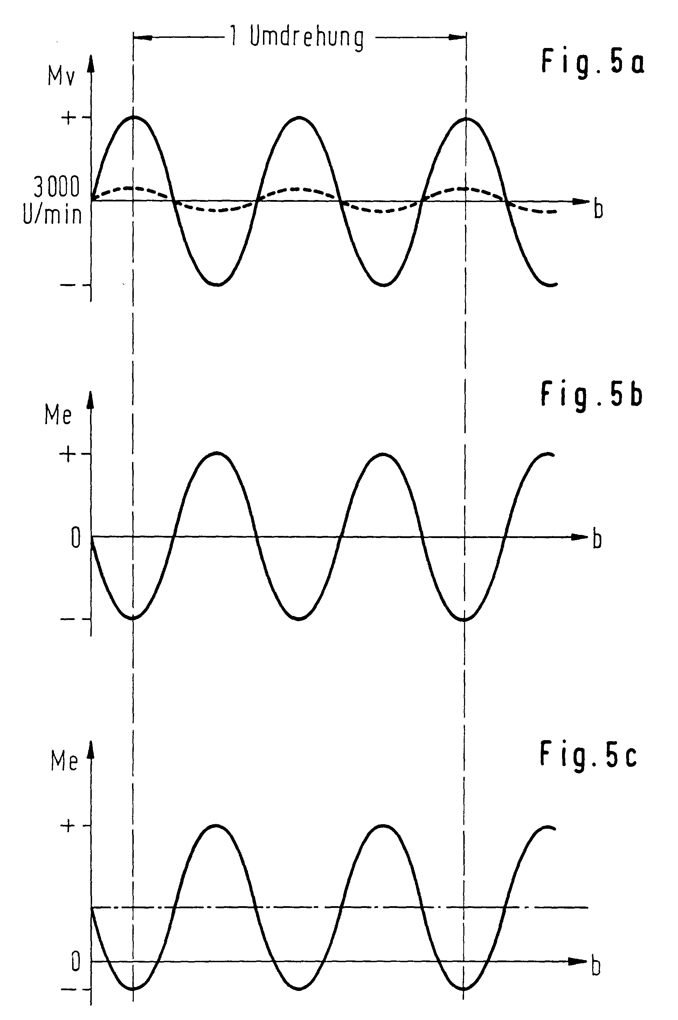

Wie in Fig. 3 veranschaulicht, ruft eine Sektormaschine neben Radialkräften (beispielsweise F_{R1}) auch drehmomentverursachende Kräfte (beispielsweise F_{T1}) hervor. Daher kann mit der elektrischen Maschine 10 gemäß Fig. 4 neben Radialschwingungen auch Drehschwingungen der Welle 4 entgegengewirkt werden, die von den Gas- und Massekräften des Motors 1 hervorgerufen werden. Fig. 5a veranschaulicht (mit durchgezogener Linie) das Drehmoment Mv des Verbrennungsmotors 1 als Funktion des Drehwinkels b der Kurbelwelle 2.

In Fig. 5b ist das Drehmoment Me als Funktion des Wellenwinkels dargestellt, das von der elektrischen Maschine 10 aufgebracht wird. Der Verlauf dieses Drehmoments entspricht weitgehend dem des Motordrehmoments Mv, ist jedoch entgegengesetzt gerichtet. Es ergibt sich eine Verringerung oder sogar praktisch ein Verschwinden der Drehmomentschwankungen Mv, wie in Fig. 5a durch die gestrichtelte Linie veranschaulicht ist. Bei der in Fig. 5b gezeigten Betriebsweise sind die negativen und positiven Drehmomentextrema betragsmäßig gleich groß. Die bei einer Bremsphase gewonnene Energie ist also im wesentlichen gleich groß wie die bei der folgenden Antriebsphase benötigte Energie.

Beim Entgegenwirken von Radialschwingungen oder Aufbringen eines bremsenden Drehmoments wird dem System mechanische Energie entzogen und in elektrische Energie umgewandelt. Die elektrische Maschine 10 hat dann außerdem die Funktion eines Generators, der Strom z.B. zum Ausgleichen der Betriebsverluste des Systems, zum Laden der Fahrzeugbatterie 24 und zum Betreiben elektrischer Verbraucher liefern kann.

Das Drehmoment Me der elektrischen Maschine 10 kann auch gemäß Fig. 5c in positiver Richtung verschoben sein. Die elektrische Maschine 10 dient dann außer der Verringerung von Radial- bzw. Drehschwingungen als (antreibender) Motor, z.B. um den Verbrennungsmotor 1 bei einer Fahrzeugbeschleunigung zu unterstützen.

Die elektrische Maschine 10 erfüllt somit mehrere Funktionen: einerseits verringert sie Radial- und Drehschwingungen der Welle 4, andererseits fungiert sie als Generator zur Ladung einer Fahrzeugbatterie 24 und ersetzt damit eine herkömmlicherweise im Kraftfahrzeug vorhandene Lichtmaschine. Die Generatorfunktion kann ferner zum Abbremsen des Fahrzeugs oder des Verbrennungsmotors 1 dienen. Außerdem kann die elektrische Maschine als Zusatzmotor ("Booster") fungieren, z.B. um den Verbrennungsmotor 1 beim Beschleunigen des Fahrzeugs zu unterstützen. Auch dient sie als Starter für den Verbrennungsmotor 1 und kann somit auch einen herkömmlicherweise beim Kraftfahrzeug gesondert vorgesehenen Starter ("Anlasser") ersetzen. Schließlich fungiert sie aufgrund des Massenträgheitsmoments des Läufers 17 als Schwungrad und kann so das bei herkömmlich in Kraftfahrzeugen vorhandene, auf der Kurbelwelle sitzende Schwungrad ersetzen.

Gemäß Fig. 2 liefert je ein Wechselrichter 28 pro Wirksektor des Ständers 19 bzw. pro Sektormaschine 15, 16 bei einer hohen Taktfrequenz (z.B. 100 Hz) Spannungsimpulse frei wählbarer Amplitude, Frequenz und Phase (dargestellt ist nur ein Wechselrichter).

Im Zwischenkreis des Wechselrichters 28 ist eine Kapazität 29 und mit dem Zwischenkreis des Wechselrichters 28 verbunden sind Speicher 26 angeordnet, bei denen es sich um ein Schwungrad, eine Batterie oder eine Kapazität handeln kann. Der Speicher 26 und die Kapazität 29 haben die Aufgabe, die beim Bremsen der Welle 10 gewonnene Energie zwischenzuspeichern und anschließend wieder abzugeben.

Eine Steuereinrichtung 27 gibt dem Wechselrichter 28 durch entsprechende Ansteuerung seiner Halbleiterschalter zu jedem Zeitpunkt vor, welche Amplitude, Frequenz und Phase die erzeugten Wechselspannungen haben. Die Steuereinrichtung 27, die beispielsweise durch ein entsprechend programmiertes Mikrocomputersystem gebildet sein kann, bestimmt zunächst den Betrag und die Richtung von Radialkraft und Drehmoment, welche die elektrische Maschine 10 zu einem bestimmten Zeitpunkt erzeugen soll. Sie kann dies z.B. mit Hilfe einer Kennfeldsteuerung tun, indem sie als Eingangsinformation Winkel- und Radiallage der Welle 4, die momentane mittlere Drehzahl und ggf. weitere Betriebsparameter, wie z.B. die Drosselklappenstellung erhält und aus einem gespeicherten Kennfeld die momentan zu erwartende Radialschwingung und Drehungleichförmigkeit in Abhängigkeit von diesen Betriebsparametern ermittelt. Eine andere Möglichkeit besteht darin, tatsächlich vorliegende Radialschwingungen und Drehungleichförmigkeiten zu ermitteln. Möglich ist auch eine Kombination aus Regelung und Steuerung.

Zum Messen der Radialauslenkung und -geschwindigkeit dienen zwei Sensoren 30 (dargestellt ist nur ein Sensor). Der Sensor 30 weist einen jochförmig um die Welle 4 ausgeformten Ferritkern mit wechselstrombeaufschlagten Wicklungen auf. Die Flußlinien des erzeugten elektromagnetischen Feldes treten an einem Ende des Ferritkerns des Sensors 30 aus und laufen über einen Luftspalt in die Welle 4, treten aus der Welle 4 aus und laufen über einen weiteren Luftspalt in das andere Ende des Ferritkerns des Sensors 30. Führt die Welle 4 Radialschwingungen aus, ändert sich die Größe der Luftspalte und somit die Induktivität des Sensors 30. Hieraus kann die momentane Auslenkung und Geschwindigkeit der Welle 4 in einer Radialrichtung ermittelt werden. Zur Detektierung der Auslenkung und Geschwindigkeit der Welle 4 in einer anderen Radialrichtung dient der zweite Sensor. Außerdem ist zur Messung der Drehungleichförmigkeiten die elektrische Maschine 10 mit einem Drehtransformator (sog. Resolver) ausgerüstet (hier nicht dargestellt). Er besteht aus zwei benachbart angeordneten Leiterplatten, von denen eine feststeht und die andere sich mit der Welle 4 dreht. Die Leiterplatten tragen auf ihren zugewandten Oberflächen durch Leiterbahnen gebildete Windungen, derart daß sich ein drehwinkelabhängiges Transformator-Übersetzungsverhältnis ergibt. Der Drehtransformator arbeitet nach dem Transponder-Prinzip: Die feststehenden Windungen (feststehende Platine) werden aktiv mit Strom/Spannung beaufschlagt und strahlen elektromagnetische Energie zu den drehbaren Windungen (drehbare Platine) hin ab. Letztere strahlen einen Teil dieser Energie wieder zurück, wobei der Reflexionsfaktor drehwinkelabhängig ist. Der rückgestrahlte Teil erzeugt in den feststehenden Windungen ein drehwinkelabhängiges Signal. Eine Auswertung dieses Signals liefert den momentanen Drehwinkel der Welle 4 mit einer Genauigkeit von wenigstens 0,5 Grad.

Aus dem ermittelten Wert für die momentane Radialschwingung und der momentanen Drehungleichförmigkeit werden (gegenphasige) Werte der von der elektrischen Maschine 10 aufgebrachten, schnell variierenden Radialkraft und Drehmomente abgeleitet, denen ggf. ein positives oder negatives Zusatzdrehmoment gewünschter Stärke additiv überlagert wird. Zum Starten des Verbrennungsmotors 1 kann das Solldrehmoment auf der Grundlage gespeicherter Werte bestimmt werden, die den zeitlichen Verlauf der Drehzahl oder des Drehmoments der elektrischen Maschine 4 während des Startvorgangs vorgeben, gegebenenfalls ergänzt durch eine Messung dieser Größen und eine rückgekoppelte Regelung, welche die Einhaltung der Vorgaben sicherstellt.

In einem zweiten Schritt bestimmt die Steuereinrichtung 27, welche Amplitude, Frequenz und Phase der Spannungen bzw. der Ströme von den Wechselrichtern 28 bereitgestellt werden müssen, damit die elektrische Maschine 10 die gewünschten Radialkräfte und Drehmomente ausübt.

Ein und diesselbe elektrische Maschine 10 kann also sowohl Radialschwingungen als auch Drehschwingungen der Welle 4 entgegengewirken, wobei die Schwingungsdämpfung über ein weites Frequenzband erfolgen kann und Dämpfungsgrad und Dämpfungscharakteristik in weiten Grenzen frei einstellbar sind.

## Patentansprüche

1. System zur aktiven Dämpfung von Schwingungen einer rotierenden Welle (4), insbesondere der Triebwelle eines Verbrennungsmotors (1), mittels einer elektrischen Maschine (10; 15, 16), welche zwei relativ zueinander drehbare elektromagnetische Wirkeinheiten (17, 19) aufweist, von denen eine mit der rotierenden Welle (4) verbunden ist und die andere gegen Drehung festgelegt oder - alternativ - mit einer anderen drehbaren Welle verbunden ist,
dadurch gekennzeichnet, daß
eine der Wirkeinheiten (19) wenigstens zwei elektrisch unabhängig ansteuerbare Wirksektoren (15, 16; 23a, 23b, 23c, 23d) zur Erzeugung von Wanderfeldern umfaßt, die jeweils auf die andere Wirkeinheit (17) Kräfte mit Radial- und Tangentialkomponenten (F_{R1}, F_{R2}, F_{T1}, F_{T2}) ausüben derart, daß in den wenigstens zwei Wirksektoren (15, 16; 23a, 23b, 23c, 23d) die Radialkomponenten (F_{R1}, F_{R2}) sich nicht aufheben zu einer ersten Radialkraft (F_{R3}), und die Tangentialkomponenten (F_{T1}, F_{T2}) ein Drehmoment erzeugen, so daß die elektrische Maschine (10) sowohl Radial- als auch Drehschwingungen der Welle (4) dämpft, oder sich die Tangentialkomponenten (F_{T1}, F_{T2}) zu einer gegenüber der ersten Radialkraft (F_{R3}) verschieden gerichteten, zweiten Radialkomponente (F_{T3}) addieren, so daß die elektrische Maschine (10) Radialschwingungen der Welle (4) dämpft.

2. System nach Anspruch 1, bei welchem die unabhäng ansteuerbaren Wirksektoren voneinander gesonderte Wirksektoren (15, 16) sind.

3. System nach Anspruch 1, bei welchem die unabhängig ansteuerbaren Wirksektoren (23 a,b,c,d) durch unabhängige Wicklungsabschnitte gebildet werden, die gemeinsam auf einem magnetisch leitenden Ständerkörper (19) angeordnet sind.

4. System nach einem der vorhergehenden Ansprüche, bei welchem die elektrische Maschine (10; 15, 16) die Welle (4) außerdem mit einem antreibenden oder bremsenden Gleichdrehmoment beaufschlagen kann.

5. System nach einem der vorhergehenden Ansprüche, bei welchem die elektrische Maschine (10; 15, 16) so ausgelegt ist, daß sie außerdem die Funktion eines Starters für den Verbrennungsmotor (1), eines Generators zur Stromversorgung, einer Fahrzeugbremse, einer Beschleunigungsunterstützung für das Fahrzeug hat.

6. System nach einem der vorhergehenden Ansprüche, bei welchem die elektrische Maschine (10; 15, 16) so ausgelegt ist, daß sie zusätzlich als elektromagnetische Kupplung im Antriebsstrang und/oder als aktive Getriebesynchronisiereinrichtung wirkt.

7. System nach einem der vorhergehenden Ansprüche, bei welchem die bei bremsender oder schlupfender Wirkung gewonnene Energie wenigstens teilweise gespeichert und wenigstens teilweise wiederverwendet wird.

8. System nach einem der vorhergehenden Ansprüche, bei welchem die elektrische Maschine (10; 15, 16) von einem Wechselrichter (28) gesteuert wird, der diese zum Erzeugen der elektromagnetischen Felder mit Strömen und Spannungen variabler Amplitude, Frequenz und Phase versorgt.

## Claims

1. A system for the active dampening of vibrations of a rotating shaft (4), in particular the drive shaft of an internal combustion engine (1), by means of an electric machine (10; 15, 16), which comprises two active electromagnetic units (17, 19) that can rotate relative to one another, one of which is connected to the rotating shaft (4) and the other of which is secured to prevent turning or - alternatively - is connected to another rotatable shaft,
**characterised in that**
one of the active units (19) comprises at least two electrically independently actuatable active sectors (15, 16; 23a, 23b, 23c, 23d) for generating travelling fields, each of which exerts forces with radial and tangential components (F_{R1}, F_{R2}, F_{T1}, F_{T2}) on the other active unit (17) in such a manner that in the at least two active sectors (15, 16; 23a, 23b, 23c, 23d) the radial components (F_{R1}, F_{R2}) do not cancel one another out to a first radial force (F_{R3}), and the tangential components (F_{R1}, F_{R2}) generate a torque so that the electric machine (10) dampens both radial and rotational vibrations of the shaft (4), or the tangential components (F_{T1}, F_{T2}) add up to a second radial component (F_{T3}) which is differently directed to the first radial force (F_{R3}), so that the electric machine (10) dampens radial vibrations of the shaft (4).

2. A system according to Claim 1, in which the independently actuatable active sectors are separate active sectors (15, 16).

3. A system according to Claim 1, in which the independently actuatable active sectors (23 a, b, c, d) are formed by independent winding sections, which are arranged jointly on a magnetically conducting stator body (19).

4. A system according to one of the preceding Claims, in which the electric machine (10, 15, 16) can also load the shaft (4) with a driving or braking constant torque.

5. A system according to one of the preceding Claims, in which the electric machine (10; 15, 16) is designed so that it also has the function of a starter for the internal combustion engine (10), a generator for the power supply, a vehicle brake, an acceleration booster for the vehicle.

6. A system according to one of the preceding Claims, in which the electric machine (10; 15, 16) is designed so that it additionally acts as an electromagnetic coupling in the drive train and/or as an active transmission synchronisation device.

7. A system according to one of the preceding Claims, in which the energy obtained during the braking or slipping action is at least partly stored up and is at least partly reused.

8. A system according to one of the preceding Claims, in which the electric machine (10: 15, 16) is controlled by an inverter (28), which supplies it with currents and voltages of variable amplitude, frequency and phase in order to generate the electromagnetic fields.

## Revendications

1. Système pour réaliser l'amortissement actif d'oscillations ou de vibrations d'un arbre rotatif (4), notamment de l'arbre de sortie d'un moteur à combustion interne (1), à l'aide d'une machine électrique (10; 15, 16), qui comporte deux unités électromagnétiques actives (17, 19) pouvant tourner l'une par rapport à l'autre et dont l'une est reliée à l'arbre rotatif (4) et dont l'autre est bloquée contre toute rotation ou - sinon - est reliée à un autre arbre rotatif,
caractérisé en ce que
l'une des unités actives (19) comporte au moins deux secteurs actifs (15, 16; 23a, 23b, 23c, 23d), qui peuvent être commandées électriquement de façon indépendante et servent à produire des champs progressifs, qui exercent, respectivement sur l'autre unité active (17), des forces ayant des composantes radiales et tangentielle (F_{R1}, F_{R2}, F_{T1}, F_{T2}) de telle sorte que dans les au moins deux secteurs actifs (15, 16; 23a, 23b, 23c, 23d), les composantes radiales (F_{R1}, F_{R2}) ne s'annihilent pas et conduisent à une première force radiale (F_{R3}), et les composantes tangentielles (F_{T1}, F_{T2}) produisent un couple de sorte que la machine électrique (10) amortit aussi bien des oscillations radiales que des oscillations de rotation de l'arbre (4), ou bien les composantes tangentielles (F_{T1}, F_{T2}) s'additionnent pour former une seconde composante radiale (F_{T3}), qui est orientée différemment de la première force radiale (F_{R3}) de sorte que la machine électrique (10) amortit des oscillations radiales de l'arbre (4).

2. Système selon la revendication 1, dans lequel les secteurs actifs commandables de façon indépendante sont des secteurs actifs (15, 16) séparés l'un de l'autre.

3. Système selon la revendication 1, dans lequel les secteurs actifs (23a, b, c, d) commandables de façon indépendante sont formés par des sections d'enroulement indépendantes, qui sont disposées sur un corps formant stator magnétiquement conducteur (19).

4. Système selon l'une des revendications précédentes, dans lequel la machine électrique (10; 15, 16) peut charger en outre l'arbre (4) par un couple constant d'entraînement ou de freinage.

5. Système selon l'une des revendications précédentes, dans lequel la machine électrique (10; 15, 16) est agencée de telle sorte qu'elle possède en outre la fonction d'un démarreur pour le moteur à combustion interne (1), d'un générateur pour l'alimentation en courant, d'un frein du véhicule, d'une unité d'assistance d'accélération pour le véhicule.

6. Système selon l'une des revendications précédentes, dans lequel la machine électrique (10; 15, 16) est agencée de telle sorte qu'elle agit en supplément en tant qu'accouplement électromagnétique dans la chaîne motrice et/ou en tant que dispositif actif de synchronisation de la transmission.

7. Système selon l'une des revendications précédentes, dans lequel l'énergie récupérée lors de l'action de freinage ou de glissement, est accumulée au moins partiellement et est réutilisée au moins partiellement.

8. Système selon l'une des revendications précédentes, dans lequel la machine électrique (10; 15, 16) est commandée par un onduleur (28), qui alimente la machine pour produire des champs électromagnétiques avec des courants et des tensions ayant une amplitude, une fréquence et une phase variables.
